# EUROPÄISCHE PATENTSCHRIFT

(11) **EP 2 444 316 B1**
(45) Veröffentlichungstag und Bekanntmachung des Hinweises auf die Patenterteilung: **17.02.2016**
(21) Anmeldenummer: 10013942.7
(22) Anmeldetag: 25.10.2010
(51) Int. Cl.: B64C 11/42

(54) **Hydraulischer Verstellpropeller**
Hydraulic variable pitch propeller
Hélice à pas variable de réglage hydraulique

(43) Veröffentlichungstag der Anmeldung: 25.04.2012
(73) Patentinhaber: MT-Propeller Entwicklung GmbH, 94348 Atting (DE)
(72) Erfinder: Mühlbauer, Gerd, 94360 Mitterfels (DE)
(74) Vertreter: advotec.

(56) Entgegenhaltungen:
- EP-A2- 1 270 408
- EP-A2- 2 052 965
- US-A- 2 576 619
- US-A- 3 640 644

## Beschreibung

Die Erfindung betrifft einen redundanten hydraulischen Verstellpropeller für ein Luft-, Land- oder Wasserfahrzeug mit den Merkmalen des Oberbegriffs des Patentanspruchs 1.

Ein derartiger Verstellpropeller ist aus der Praxis bekannt und umfasst eine hydraulische Einrichtung, die mit einer Kolbeneinheit versehen ist, mittels derer Propellerblätter hinsichtlich ihres Anstellwinkels verstellbar sind.

Dokument EP2052965, das alle Merkmale des Oberbegriffs des Anspruchs 1 offenbart und als nächstliegender Stand der Technik angesehen wird, zeigt ein solcher Verstellpropeller.

Grundsätzlich sind verschiedene Vorrichtungen und Verfahren bekannt, um den Anstellwinkel von Propellerblättern zu verstellen. Üblicherweise umfassen die bekannten Vorrichtungen und Verfahren hydraulische Systeme, mittels derer der Blattwinkel für eine zugeordnete Triebwerksleitung, eine zugeordnete Propellerdrehzahl und Vorwärtsgeschwindigkeit automatisch und stufenlos verstellt werden kann. Die bekannten Systeme haben einen Verstellkolben, so dass bei einem Ausfall des hydraulischen Systems eine Verstellung des Anstell- bzw. Blattwinkels nicht möglich ist. Zur Vereinderung von gefährlichen Überdrehzahlen sind daher Einrichtungen zur Blockierung der Verstellbewegung der Propellerblätter vorgesehen. Insbesondere ist es bekannt, Gegengewichte im Bereich der Blattwurzel der einzelnen Propellerblätter zu installieren. Dies ist mit unerwünschtem Gewicht verbunden.

Übliche Verstellsysteme umfassen zur Verhinderung gefährlicher Überdrehzahlen beim Ausfall des Hydrauliksystems eine so genannte Steigungsblockierung, die den Blattwinkel in derjenigen Stellung blockiert, der zum Zeitpunkt eines Druckverlustes vorliegt.

Der Erfindung liegt die Aufgabe zugrunde, einen hydraulischen Verstellpropeller bereit zu stellen, der mit einem hydraulischen System versehen ist, welches eine hohe Betriebssicherheit des Propellers ohne die vorgenannten Sicherheitseinrichtungen gewährleistet.

Diese Aufgabe ist erfindungsgemäß durch den hydraulischen Verstellpropeller mit den Merkmalen des Patentanspruchs 1 gelöst.

Gemäß der Erfindung wird mithin ein redundanter hydraulischer Verstellpropeller für ein Luft-, Land- oder Wasserfahrzeug vorgeschlagen, umfassend mindestens zwei Propellerblätter, die im Bereich einer Propellernabe gelagert sind und hinsichtlich ihres Anstellwinkels mittels einer hydraulisch angetriebenen Kolbeneinheit verstellbar sind. Die Kolbeneinheit umfasst zwei mechanisch miteinander verbundene Verstellkolben, die jeweils einem unabhängigen Hydraulikkreis zugeordnet sind. Die Verstellkolben sind jeweils als doppelt wirkender Kolben ausgebildet. Die Verstellkolben sind also in axialer Richtung, d. h. in Verstellrichtung, beidseits von einem Hydraulikdruckraum begrenzt, so dass ein Verstellen über die Druckdifferenz zwischen den beiden Druckräumen definiert ist.

Bei dem Verstellpropeller nach der Erfindung ist auch bei Ausfall eines der beiden unabhängigen Hydraulikkreise eine Ansteuerung der Kolbeneinheit möglich, so dass auch dann noch eine Verstellung des Anstellwinkels der Propellerblätter gewährleistet ist. Dies gewährleistet eine hohe Betriebssicherheit eines Verstellpropellers ohne dass Gegengewichte im Bereich der Blattwurzeln oder eine Steigungsblockierung der oben beschriebenen Art vorgesehen werden müssten. Die Größe der beiden Verstellkolben ist zweckmäßigerweise so bemessen, dass bei Ausfall eines Hydraulikkreises die Verstellung der Propellerblätter allein durch den anderen Hydraulikkreis möglich ist. Die Verstellung des Anstellwinkels der Propellerblätter erfolgt in beide Richtungen durch Anlegen eines entsprechenden hydraulischen Drucks an die Verstellkolben. Je nach gewünschtem Verstellvorgang wird in den beiden Druckräumen, die einen Verstellkolben begrenzen, eine entsprechende Druckdifferenz eingestellt, die ein Verfahren des Verstellkolbens und damit ein Verstellen der Propellerblätter bewirkt.

Bei einer Ausführungsform des hydraulischen Verstellpropellers nach der Erfindung umfassen die beiden Hydraulikkreise eine gemeinsame Ventileinheit, mittels derer die beiden Verstellkolben synchron mit einem gewünschten Servodruck beaufschlagbar sind. Die Ventileinheit umfasst beispielsweise zwei Steuerschieber, die mittels eines gemeinsamen Aktuators antreibbar sind und den Hydraulikdruck bzw. Servodruck, mit dem die beiden Kolben der im Bereich der Propellernabe angeordneten Kolbeneinheit beaufschlagt werden, eingestellt wird.

Bei einer Ausführungsform des Ventils nach der Erfindung können die Ventileinheit und die Verstellkolben über ein doppelwandiges Steuerrohr miteinander verbunden sein, welches vier Steuerkanäle umfasst, von denen jeder einem Druckraum zugeordnet ist, von denen jeweils zwei an einen der Verstellkolben grenzen.

Das Steuerrohr kann mit den beiden Steuerschiebern der Ventileinheit zusammenwirken, welche jeweils einem der Hydraulikkreise zugeordnet sind.

Die Ventileinheit umfasst insbesondere zwei unabhängige Hydraulikkammern, die von zwei unabhängigen Druckquellen gespeist werden und über das Steuerrohr hydraulisch mit den Druckräumen verbunden sind, die jeweils einem der Verstellkolben zugeordnet sind. Das Steuerrohr stellt auch eine mechanische Verbindung zwischen der Ventileinheit und den Kolben der Kolbeneinheit her.

Die Ventil- bzw. Steuereinheit kann auch zwei unabhängig voneinander betätigte Steuerschieber umfassen, die jeweils einem der Verstellkolben zugeordnet sind und unabhängig voneinander die beiden Verstellkolben mit einem Hydraulikfluid versorgen, um die Blattverstellung im Falle des Ausfalls eines Hydraulikkreises aufrecht zu erhalten.

Die Steuereinheit ist insbesondere an einem Getriebe eines Triebwerks zum rotierenden Antrieb des Propellers befestigt. Das Steuerrohr durchgreift zweckmäßigerweise das Getriebe, so dass es in die Propellernabe eingreift und die Hydraulikverbindungen zwischen der Steuereinheit und den Druckräumen für die Verstellkolben herstellt.

Die für die beiden Hydraulikkreise verwendete, unter Druck stehende Hydraulikflüssigkeit kann statisch mit konstantem Druck mittels einer Pumpe oder dynamisch mittels eines Propeller-Reglers geregelt sein.

Weitere Vorteile und vorteilhafte Ausgestaltungen des Gegenstandes der Erfindung sind der Beschreibung, der Zeichnung und den Patentansprüchen entnehmbar.

Ein Ausführungsbeispiel eines Verstellpropellers nach der Erfindung ist in der Zeichnung schematisch vereinfacht dargestellt und wird in der nachfolgenden Beschreibung näher erläutert. Es zeigt:
Fig. 1 einen Längsschnitt durch eine Propellernabe;
Fig. 2 einen Längsschnitt durch eine Steuereinheit zur Verstellung des Anstellwinkels von Propellerblättern; und
Fig. 3 einen Querschnitt durch ein Steuerrohr des Verstellpropellers.

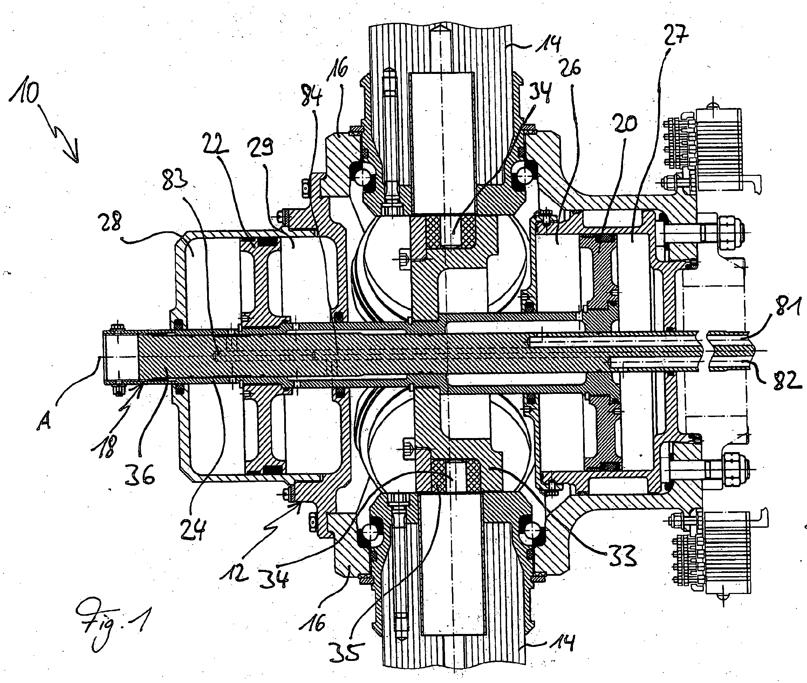

In Fig. 1 ist ein hydraulisch verstellbarer Verstellpropeller 10 dargestellt, der eine Propellernabe 12 und mindestens zwei Propellerblätter 14 mit jeweils zugeordneten Lagerungen 16 aufweist, die hinsichtlich ihres Anstellwinkels einstellbar sind.

In der Propellernabe 12 ist eine Kolbeneinheit 18 dargestellt, die zwei Verstellkolben 20 und 22 umfasst, welche über ein Verbindungsrohr 24 mechanisch miteinander verbunden sind, welches in der Achse A der Propellernabe 12 angeordnet ist. An den Verstellkolben 20 grenzt an einer Seite ein erster Druckraum 26 und an der anderen Seite ein zweiter Druckraum 27. Die beiden Druckräume 26 und 27 sind einem ersten Hydraulikkreis zugeordnet. An den Verstellkolben 22 grenzt an einer Seite ein dritter Druckraum 28 und an der anderen Seite in vierter Druckraum 29. Die Druckräume 28 und 29 sind einem zweiten Hydraulikreis zugeordnet. Die Verstellkolben 20 und 22 sind also jeweils als doppelt wirkender Kolben ausgebildet, der in axialer Richtung beidseits von einem Druckraum begrenzt ist.

Mit der Kolbeneinheit 18 ist ein Gabelstück 33 verbunden, das über Verstellzapfen 34, die jeweils in einen Gleitstein 35 eingreifen, bei einem Verfahren der Kolbeneinheit 18 eine Änderung des Anstellwinkels der Propellerblätter 14 bewirkt.

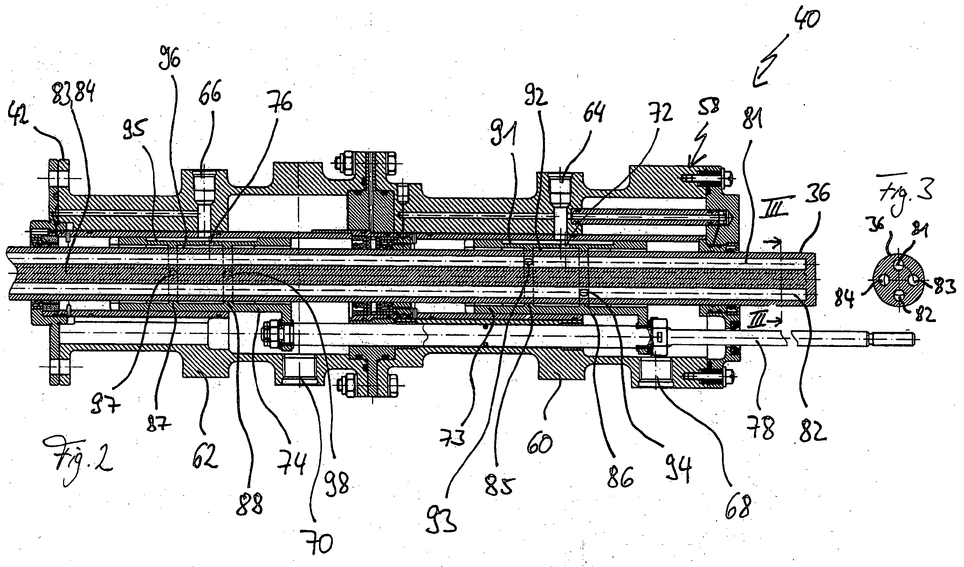

In dem Verbindungsrohr 24 ist ein Steuerrohr 36 angeordnet, welches fest mit dem Verbindungsrohr 24 verbunden ist, sowie die Druckräume 26, 27, 28 und 29 über Steuerkanäle 81, 82, 83 und 84 mit einer Steuereinheit bzw. Ventileinheit 40 hydraulisch verbindet, welche in Fig. 2 dargestellt ist. Die Steuereinheit 40 ist über einen Flansch 42 an der Rückseite eines nicht näher dargestellten Getriebes des ebenfalls nicht näher dargestellten Triebwerks befestigt. Das Steuerrohr 36 durchgreift mithin das Getriebe.

Die Steuereinheit 40, die von dem Steuerrohr 36 durchgriffen ist, weist ein zweiteiliges Ventilgehäuse 58 auf, wobei ein erstes Ventilgehäuseelement 60 dem ersten Hydraulikkreis und ein zweites Ventilgehäuseelement 62, das mit dem ersten Ventilgehäuseelement 60 verbunden ist, dem zweiten Hydraulikkreis zugeordnet ist. Die beiden Ventilgehäuseelemente 60 und 62 sind jeweils mit einem Servodruckanschluss 64 bzw. 66 versehen, welcher mit einer dem jeweiligen Hydraulikkreis zugeordneten Druckquelle verbunden ist, die als Pumpe oder auch als Propellerregler ausgebildet sein kann. Des Weiteren weisen die beiden Ventilgehäuseelemente 60 und 62 jeweils einen Rücklaufanschluss 68 bzw. 70 auf.

In dem Ventilgehäuseelement 60 ist ein erster Steuerschieber 73 angeordnet, der über zwei Dichtlippen 85 und 86, die axial voneinander beabstandet sind, an dem Steuerrohr 36 verschiebbar geführt. Der Steuerschieber 73 weist einen äußeren Ringraum 91 auf, der mit dem Servodruckanschluss 64 in Verbindung steht und über eine Schieberbohrung 72 mit einem inneren Ringraum 92 verbunden ist, der axial von den beiden Dichtlippen 85 und 86 und radial innen von dem Steuerrohr 36 begrenzt ist. Je nach Stellung des Steuerschiebers 73 kann der Steuerkanal 81 über eine Steuerrohrbohrung 93 oder der Steuerkanal 82 über eine Steuerrohrbohrung 94 mit dem inneren Ringraum 92 zur Beaufschlagung des ersten Druckraums 26 oder des zweiten Druckraums 27 mit dem an dem Servodruckanschluss 64 anliegenden Hydraulikdruck in Verbindung gebracht werden. In der in Fig. 2 dargestellten Mittelstellung sind die Steuerrohrbohrungen 93 und 94 mit den Dichtlippen 85 und 86 des Steuerschiebers 73 zur Deckung gebracht. Diese Stellung entspricht der Nullstellung der Propellerblätter 14.

In dem zweiten Ventilgehäuseelement 62 ist entsprechend zu dem ersten Ventilgehäuseelement 60 ein zweiter Steuerschieber 74 verschiebbar angeordnet, der über zwei Dichtlippen 87 und 88 an dem Steuerrohr 36 verschiebbar geführt ist und zur Steuerung des in den Druckräumen 28 und 29 anliegenden Hydraulikdrucks dienen. Der Steuerschieber 74 weist einen äußeren Ringraum 95 auf, der mit dem Servodruckanschluss 66 in Verbindung steht und über eine Bohrung 76 mit einem inneren Ringraum 96 in Verbindung steht, der axial von den beiden Dichtlippen 87 und 88 und radial innen von dem Steuerrohr 36 begrenzt ist. In Abhängigkeit von der Stellung des Steuerschiebers 74 kann der innere Ringraum 96 entweder über eine Steuerrohrbohrung 97 mit dem Steuerkanal 83 zur Beaufschlagung des Druckraums 28 mit dem an dem Servodruckanschluss 66 anliegenden Hydraulikdruck oder über eine Steuerrohrbohrung 98 zur Beaufschlagung des Druckraums 29 mit dem Steuerkanal 84 verbunden werden. In der in Fig. 2 dargestellten Stellung sind die beiden Steuerrohrbohrungen 97 und 98 mit den Dichtlippen 87 und 88 zur Deckung gebracht, was ebenfalls der Nullstellung der Propellerblätter 14 entspricht. Der axiale Abstand zwischen den Steuerrohrbohrungen 97 und 98 entspricht dem axialen Abstand der Dichtlippen 87 und 88. Entsprechend entspricht der axiale Abstand der Steuerrohrbohrungen 93 und 94, die dem Steuerschieber 73 zugeordnet sind, dem axialen Abstand der Dichtlippen 85 und 86 des Steuerschiebers 73.

Die Steuerschieber 73 und 74 sind mit einer gemeinsamen Betätigungsstange 78 verbunden, die sich in axialer Richtung der Steuereinheit 40 erstreckt und mittels eines geeigneten Betätigungsmittels in axialer Richtung zur Verschiebung der Steuerschieber 73 und 74 verschiebbar ist. Durch ein Verschieben der Steuerschieber 73 und 74 mittels der Betätigungsstange 78 ändert sich der über die Steuerkanäle 81, 82, 83 und 84 zu den Verstellkolben 20 und 22 geführte Hydraulikdruck, so dass die Kolbeneinheit 18 je nach Druckdifferenz in den Druckräumen 26, 27, 28 und 29 in axialer Richtung verschoben wird und eine Änderung des Anstellwinkels der Propellerblätter 14 bewirkt.

## Patentansprüche

1. Hydraulischer Verstellpropeller für ein Luft-, Land- oder Wasserfahrzeug, mit mindestens zwei Propellerblättern (14), die im Bereich einer Propellernabe (12) gelagert sind und hinsichtlich ihres Anstellwinkels mittels einer hydraulisch angetriebenen Kolbeneinheit (18) verstellbar sind, wobei die Kolbeneinheit (18) zwei mechanisch miteinander verbundene Verstellkolben (20, 22) umfasst, die jeweils einem unabhängigen Hydraulikkreis zugeordnet sind, **dadurch gekennzeichnet, dass** die Verstellkolben (20, 22) jeweils als doppelt wirkender Kolben ausgebildet sind, wobei die beiden Hydraulikkreise eine gemeinsame Ventileinheit (40) umfassen, mittels derer die beiden Verstellkolben (20, 22) synchron mit einem gewünschten Servodruck beaufschlagbar sind, und die Ventileinheit (40) und die Verstellkolben (20, 22) über ein Steuerrohr (36) miteinander verbunden sind, das vier Steuerkanäle (81, 82, 83, 94) umfasst, von denen jeder einem Druckraum (26, 27, 28, 29) zugeordnet ist, von denen jeweils zwei an einen der beiden Verstellkolben (20, 22) grenzen.

2. Hydraulischer Verstellpropeller nach Anspruch 1, **dadurch gekennzeichnet, dass** das Steuerrohr (36) mit zwei Steuerschiebern (73, 74) der Ventileinheit (40) zusammenwirkt, die jeweils einem der Hydraulikkreise zugeordnet sind.

3. Hydraulischer Verstellpropeller nach Anspruch 2, **dadurch gekennzeichnet, dass** die Steuerschieber (73, 74) mit einer gemeinsamen Betätigungsstange (78) verbunden sind.

4. Hydraulischer Verstellpropeller nach einem der Ansprüche 1 bis 3, **dadurch gekennzeichnet, dass** die Ventileinheit (40) zwei unabhängige Hydraulikkammern umfasst, die von zwei Druckquellen gespeist werden und die Steuerkanäle über das Steuerrohr (36) hydraulisch mit den Druckräumen (26,28) verbunden sind, die jeweils einem der Verstellkolben (20,22) zugeordnet sind.

5. Hydraulischer Verstellpropeller nach einem der Ansprüche 1 bis 4, **dadurch gekennzeichnet, dass** die Größe der beiden Verstellkolben (20,22) so bemessen ist, dass eine Verstellung des Anstellwinkels der Propellerblätter (14) unter allen Betriebsbedingungen mit nur einem mit Hydraulikfluid beaufschlagten Verstellkolben (20,22) gewährleistet ist.

## Claims

1. A hydraulic variable pitch propeller for an air, land or water craft, comprising at least two propeller blades (14) that are mounted in the area of a propeller hub (12) and whose pitch can be varied by means of a hydraulically powered piston assembly (18), said piston assembly (18) having two mechanically interconnected servo pistons (20, 22), each of said servo pistons being assigned to an independent hydraulic circuit, **characterized in that** each of said servo pistons (20, 22) is realized as a double-acting piston, the two hydraulic circuits comprising a common valve assembly (40) by means of which a desired servo pressure can be synchronously applied to the two servo pistons (20, 22), and the valve assembly (40) and the servo pistons (20, 22) being interconnected via a control tube (36) comprising four control passageways (81, 82, 83, 84), each of which is assigned to a pressure space (26, 27, 28, 29), two each of which are adjacent to one of the two servo pistons (20, 22).

2. The hydraulic variable pitch propeller as set forth in claim 1, **characterized in that** the control tube (36) cooperates with two control spools (73, 74) of the valve assembly (40), each being assigned to one of the hydraulic circuits.

3. The hydraulic variable pitch propeller as set forth in claim 2, **characterized in that** the control spools (73, 74) are connected to a common actuating rod (78).

4. The hydraulic variable pitch propeller as set forth in any one of claims 1 to 3, **characterized in that** the valve assembly (40) comprises two independent hydraulic chambers supplied by two pressure sources and that the control passageways are hydraulically connected to the pressure chambers (26, 28) via the control tube (36), each pressure chamber being assigned to one of the servo pistons (20, 22).

5. The hydraulic variable pitch propeller as set forth in any one of claims 1 to 4, **characterized in that** the size of the two servo pistons (20, 22) is dimensioned in such a manner that varying the pitch of the propeller blades (14) is assured under all operating conditions with just one of the servo pistons (20, 22) being exposed to hydraulic fluid.

## Revendications

1. Hélice à pas variable hydraulique pour un véhicule aérien, terrestre ou naval, comprenant au moins deux pales d'hélice (14) qui sont montées dans la région d'un moyeu d'hélice (12) et qui sont variables quant à leur angle d'incidence au moyen d'un ensemble de pistons (18) actionné hydrauliquement, l'ensemble de pistons (18) comprenant deux pistons de réglage (20, 22) interconnectés mécaniquement, chacun attribué à un circuit hydraulique indépendant, **caractérisée en ce que** chaque piston de réglage (20, 22) est réalisé comme piston à double effet, les deux circuits hydrauliques comprenant un ensemble de soupapes (40) commun, au moyen duquel les deux pistons de réglage (20, 22) peuvent être pressurisés de manière synchrone avec une servo-pression désirée, et l'ensemble de soupapes (40) et les pistons de réglage (20, 22) étant interconnectés via un tube de commande (36) qui comprend quatre passages de commande (81, 82, 83, 84), chacun étant attribué à un espace de pression (26, 27, 28, 29), dont deux sont voisinés avec l'un piston de réglage (20) et deux sont voisinés avec l'autre piston de réglage (22).

2. Hélice à pas variable hydraulique selon la revendication 1, **caractérisée en ce que** le tube de commande (36) coopère avec deux tiroirs de commande (73, 74) de l'ensemble de soupapes (40), chacun étant attribué à un des circuits hydrauliques.

3. Hélice à pas variable hydraulique selon la revendication 2, **caractérisée en ce que** les tiroirs de commande (73, 74) sont connectés à une tige d'actionnement (78) commune.

4. Hélice à pas variable hydraulique selon l'une quelconque des revendications 1 à 3, **caractérisée en ce que** l'ensemble de soupapes (40) comprend deux chambres hydrauliques indépendantes qui sont alimentées par deux sources de pression et, via le tube de commande (36), hydrauliquement connectées aux espaces de pression (26, 28) qui sont chacun attribués à un des pistons de réglage (20, 22).

5. Hélice à pas variable hydraulique selon l'une quelconque des revendications 1 à 4, **caractérisée en ce que** les deux pistons de réglage (20, 22) sont dimensionnés de manière qu'une variation de l'angle d'incidence des pales d'hélice (14) est assurée dans toutes les conditions de fonctionnement avec seulement un des pistons de réglage (20, 22) pressurisé par un fluide hydraulique.
